# EUROPÄISCHE PATENTSCHRIFT

(11) **EP 1 561 645 B1**
(45) Veröffentlichungstag und Bekanntmachung des Hinweises auf die Patenterteilung: **28.03.2007**
(21) Anmeldenummer: 05002331.6
(22) Anmeldetag: 04.02.2005
(51) Int. Cl.: B60R 13/02, B60R 11/00

(54) **Kraftfahrzeug mit Verkleidungselement und Schiene**
Vehicle with a garnishing member and a rail
Véhicule équipé d'une garniture et d'un rail

(30) Priorität: 04.02.2004 DE 102004005487
(43) Veröffentlichungstag der Anmeldung: 10.08.2005
(73) Patentinhaber: ADAM OPEL AG, 65423 Rüsselsheim (DE)
(72) Erfinder: Gimbel, Hans-Peter, 65468 Trebur (DE)

(56) Entgegenhaltungen:
- DE-A1- 10 047 542
- DE-A1- 19 806 767
- US-A- 5 599 086
- PATENT ABSTRACTS OF JAPAN Bd. 014, Nr. 107 (M-0942), 27. Februar 1990 (1990-02-27) & JP 01 309840 A (HIROMI WATAYA), 14. Dezember 1989 (1989-12-14)
- PATENT ABSTRACTS OF JAPAN Bd. 012, Nr. 206 (M-708), 14. Juni 1988 (1988-06-14) & JP 63 008040 A (TOYOTA MOTOR CORP), 13. Januar 1988 (1988-01-13)

## Beschreibung

Bei der Erfindung handelt es sich um ein Kraftfahrzeug mit wenigstens einem Verkleidungselement aus Hartschaum zum wenigstens teilweisen Verkleiden eines Fahrzeuginnenraumes, und wenigstens einer Schiene, an der wenigstens ein Funktionsteil an einer Vielzahl von Stellen befestigbar ist.

Aus der DE 100 47 542 A1 ist ein Kraftfahrzeug bekannt, bei dem ein Laderaum mit Verkleidungselementen verkleidet ist. Schienen, an denen verschiedene Funktionsteile an einer Vielzahl von Stellen befestigbar sind, bilden einen Rahmen eines jeweiligen Verkleidungselementes. Die Schienen sind mittels Stützelemente, die einerseits mit einer Schiene und andererseits mit einem Karosserieteil verschweißt sind, mit einer Karosserie des Kraftfahrzeuges fest verbunden.

In jüngerer Zeit ist vorgeschlagen worden, Verkleidungselemente aus Hartschaum auszubilden, die unmittelbar an einem tragenden Karosserieelement wie etwa einem Dachblech befestigt, beispielsweise angeschraubt, werden. Wenn ein mit einem solchen Verkleidungselement verkleidetes Karosserieelement eine vom Innenraum aus zugängliche Schiene tragen soll, so kann man entweder einen von der Schiene auszufüllenden Schlitz in dem Verkleidungselement vorsehen, was nur möglich ist, wenn sich die Schiene nicht über die gesamte Länge oder Breite des Verkleidungselements erstreckt, und was dessen Stabilität stark beeinträchtigen kann, oder man kann anstelle eines einzelnen Verkleidungselements derer zwei vorsehen, die in aus DE 100 47 542 A1 bekannter Weise entlang der Schienen aufeinander treffen. Beides verkompliziert deutlich die Montage des Kraftfahrzeugs.

US 55 99 086 A beschreibt ein Beleuchtungssystem für Kraftfahrzeuge, bei dem am Fahrzeugdach eine Schiene zur verstellbaren Aufnahme von Leuchtmitteln vorgesehen ist. Die Schiene ist in einem Schlitz der Dachverkleidung mit Hilfe von Flanschen befestigt, die an beiden Seiten des Schlitzes die Auskleidung umgreifen. Die Schiene ist in ihrer Position durch die Steifigkeit der Auskleidung und nötigenfalls durch zusätzliche Befestigungsmittel gehalten.

Aufgabe der Erfindung ist daher, ein Kraftfahrzeug mit einem Verkleidungselement aus Hartschaum und einer Schiene anzugeben, bei dem das Vorhandensein der Schiene die Montage des Fahrzeugs nicht komplizierter macht als die des Fahrzeugs, das eine solche Schiene nicht aufweist.

Diese Aufgabe wird durch das Kraftfahrzeug mit den Merkmalen des Anspruchs 1 gelöst.

Im Unterschied zur oben genannten DE 100 47 542 A1 wird die Schiene beim erfindungsgemäßen Fahrzeug durch das Verkleidungselement allein gehalten, und von einer unmittelbaren Befestigung der Schiene am Karosserieelement kann abgesehen werden. Anstatt das Verkleidungselement zu schwächen oder gar zu zweiteilen, wie im Stand der Technik der Fall, versteift bei dem erfindungsgemäßen Kraftfahrzeug die eingebettete Schiene sogar das Verkleidungselement, dem sie zugeordnet ist.

Die Schiene wird schon beim Herstellen des Verkleidungselements in dessen noch nicht ausgehärteten Hartschaum eingebettet. Nach Aushärten des Hartschaumes ist die Schiene dann von diesem gehalten, vorzugsweise durch Klebwirkung, falls gewünscht aber auch durch eine entsprechende Formgebung der Schiene z. B. mit Auslegern oder Widerhaken, die eine formschlüssige Halterung der Schiene im Hartschaum gewährleisten. Die Klebewirkung kann unmittelbar auf starke Adhäsionskräfte zwischen der Schiene und dem Hartschaum oder auf die Wirkung eines zusätzlichen zwischen den beiden aufgebrachten Klebemittels zurückgehen. Durch die Einsparung von Stützelementen oder von sonstigen Befestigungsmitteln wie Haltebleche, Dachspriegel, Blechklammern, Schrauben oder Clipse wird das Fahrzeuggewicht verringert und es werden Kosten reduziert. Eine zusätzliche Kosteneinsparung ergibt sich aus der Tatsache, dass nach Zusammenbau der Karosserie des Kraftfahrzeuges keine nachträglichen Montagearbeiten zum Einbau der Schiene mehr anfallen. Auch wird dadurch eine Produktionszeit für das Kraftfahrzeug erniedrigt.

Für den Hartschaum wird bevorzugt ein Polyurethan-Schaum verwendet. Besonders bevorzugt ist der Hartschaum faserverstärkt, beispielsweise glasfaserverstärkt, um seine Zähigkeit zu erhöhen.

Das Verkleidungselement kann eine seitliche Wand oder ein Dach einer Fahrgastzelle oder eines Laderaumes verkleiden. Dabei kann der Hartschaum auch eine nachgiebige Auskleidung der Fahrgastzelle oder des Laderaumes bilden.

Die Schiene kann vorteilhafterweise wenigstens einen Befestigungsanker umfassen, der im Hartschaum eingebettet und formschlüssig gehalten ist. Es ist einerseits möglich, den Befestigungsanker als einzigen Teil der Schiene in dem Hartschaum eingebettet vorzusehen, so dass ein Rest der Schiene aus dem Hartschaum herausragt. Andererseits kann die Schiene beispielsweise bis auf eine äußere, mit einer Oberfläche des Hartschaums bündige Fläche in dem Hartschaum eingebettet sein.

Bei der Schiene kann es sich um eine Metallschiene handeln. Insbesondere Aluminiumschienen sind dabei wegen ihres günstigen Verhältnisses von Stabilität zu Gewicht bevorzugt. Die Schiene kann aber auch eine Kunststoffschiene sein.

Damit die Schiene mit bekannten Schienensystemen kompatibel ist, weist die Schiene bevorzugterweise wenigstens einen Bereich mit einem T-förmigen Querschnitt auf. Grundsätzlich kann die Schiene jedoch einen beliebigen Querschnitt aufweisen.

Die Schiene kann mit einer Einrichtung zur Versorgung des Funktionsteils mit Strom versehen sein. Beispielsweise kann ein Kabel zur Stromversorgung entlang der Schiene geführt oder aber in der Schiene integriert sein. Verschiedenste Funktionsteile wie z.B. Ablagekästen mit Innenbeleuchtung, Audiogeräte oder diverse Fahrgastinnenraumbeleuchtungen können dann über dieses Kabel mit Strom versorgt werden.

Ferner kann sich entlang der Schiene eine Lichtquelle erstrecken. Bei dieser Lichtquelle kann es sich beispielsweise um einen lecken Lichtleiter handeln, der für eine verbesserte Ausleuchtung eines Innenraumes des Kraftfahrzeuges sorgt. Vorteilhafterweise ist diese Lichtquelle von wenigstens einer Streuscheibe wenigstens teilweise abgedeckt, um für eine homogenere Lichtverteilung zu sorgen.

Die Schiene kann beispielsweise am Dach einer Fahrgastzelle in Längs- oder Querrichtung des Kraftfahrzeuges orientiert angeordnet sein. Sie kann auch in einem Verkleidungselement, das zum Verkleiden einer seitlichen Wand oder einer Karosseriesäule des Kraftfahrzeuges dient, im Wesentlichen vertikal bzw. parallel zu der Säule ausgerichtet sein.

Bevorzugte Ausführungsbeispiele der Erfindung werden nachfolgend unter Zuhilfenahme von Zeichnungen näher erläutert.

Es zeigen:
- Fig. 1:: ein Verkleidungselement für ein Fahrzeugdach mit daran befestigten Schienen;
- Fig. 2: einen Querschnitt entlang der Linie A-A der Fig. 1;
- Fig. 3: einen Querschnitt durch eine zweite Ausgestaltung einer Schiene;
- Fig. 4: einen Querschnitt durch eine dritte Ausgestaltung einer Schiene;
- Fig. 5: einen Querschnitt durch eine vierte Ausgestaltung einer Schiene;
- Fig. 6: einen Querschnitt durch eine fünfte Ausgestaltung einer Schiene.

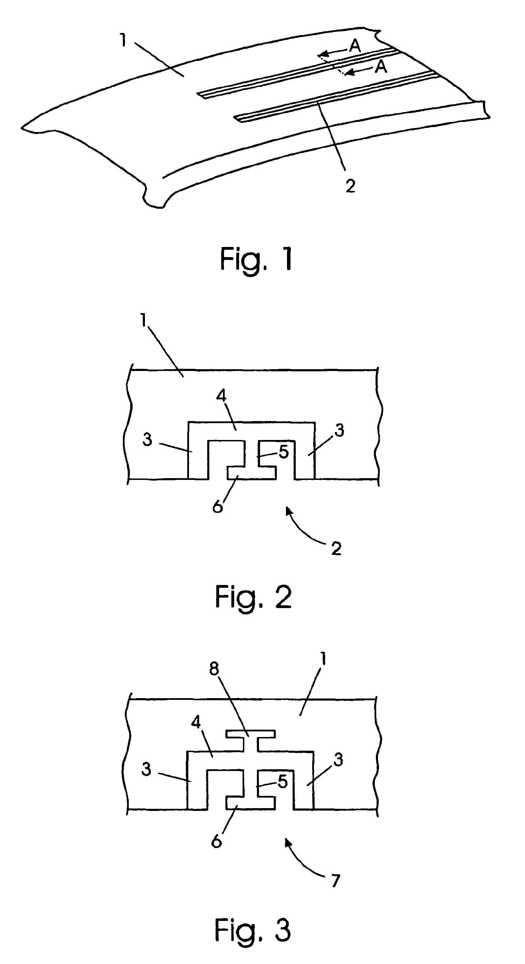

Als Beispiel für ein aus einem Hartschaum hergestelltes Verkleidungselement eines erfindungsgemäßen Kraftfahrzeuges ist in Fig. 1 ein Verkleidungselement 1 für ein Fahrzeugdach einer Fahrgastzelle des Kraftfahrzeuges dargestellt. Bei dem Hartschaum handelt es sich um einen glasfaserverstärkten Polyurethan-Schaum. Ein solcher Schaum zeichnet sich durch eine gewisse Nachgiebigkeit aus, und ist daher besonders zum Auskleiden von Fahrgastzellen in Kraftfahrzeugen geeignet, weil er Fahrzeugeinsassen einen gewissen Aufprallschutz bietet. In den Hartschaum sind zwei parallele, sich in einer Längsrichtung des Kraftfahrzeuges erstreckende und einen Schienenweg bildende Schienen 2 eingebettet und durch Klebwirkung, ohne weitere Befestigungsmittel, von diesem gehalten. Die Klebwirkung kann unmittelbar zwischen dem Hartschaum und der Schiene bestehen, oder es kann eine Klebstoffschicht eigens zwischen dem Hartschaum und der Schiene vorgesehen sein.

Ein Querschnitt entlang der Linie A-A durch eine der Schienen 2 ist in Fig. 2 gezeigt. Die Schiene 2 weist einen äußeren Bereich mit U-förmigem Profil 3, 4 auf. Dieser umfasst seitliche Schenkel 3 und eine die Schenkel 3 verbindende Basis 4. Die Schiene 2 ist mit der Basis 4 voran in den Hartschaum des Verkleidungselements 1 eingebettet, der außenliegende Flächen des U-förmigen Profils 3, 4 vollständig verdeckt, so dass die von der Basis 4 abgewandten Enden der Schenkel 3 mit der des Verkleidungselements 1 bündig abschließen.
Ferner weist die Schiene 2 einen sich zwischen den Schenkeln 3 erstreckenden mittleren Bereich mit einem T-förmigen Profil 5, 6 auf. Der mittlere Bereich umfasst ein zu den Schenkeln 3 parallel verlaufendes Fußteil 5 und einen quer zu den Schenkeln 3 ausgerichteten Querbalken 6. Das Fußteil 5 ist mit einem Ende auf der Basis 4 aufgesetzt, während der Querbalken 6 auf einem entgegengesetzten Ende des Fußteils 5 auf diesem aufgesetzt ist. Eine von der Basis 4 abgewandte Au-ßenseite des Querbalkens 6 fluchtet mit den Enden der Schenkel 3. Am mittleren Bereich lassen sich diverse Funktionsteile wie Kleiderbügel, Ablegekästen, Leuchtkörper oder Audio-/Videogeräte an verschiedenen Stellen befestigen oder entlang der Schiene 2 verschieben.

Die Halterung der Schiene 2 lässt sich durch eine formschlüssige Verbindung zwischen ihr und dem Hartschaum weiter verbessern. Beispielsweise ist es möglich, die Schenkel 3 schwalbenschwanzförmig zur Basis 4 hin divergent auszubilden, so dass der Querschnitt der Schiene 2 auf Höhe der Enden der Schenkel 3 schmaler ist als an der Basis 4. Eine formschlüssige Verbindung zwischen der Schiene 2 und dem Hartschaum ist auch durch die Ausbildung eines Befestigungsankers erzielbar, wie Fig. 3 zeigt. Die in Fig. 3 gezeigte Schiene 7 weist im Unterschied zur Schiene 2 einen an einer den Schenkeln 3 abgewandten Seite der Basis 4 ausgebildeten Befestigungsanker 8 mit T-förmigem Profil auf, der ins Innere des Hartschaums ragt. Der Befestigungsanker 8 kann entlang der Länge der Schiene 7 durchgängig sein, es können aber auch einzelne voneinander beabstandete Befestigungsanker 8 an der Basis 4 vorgesehen sein. Infolge des T-förmigen Profils und weil der Befestigungsanker 8 gänzlich vom Hartschaum umgeben ist, ist er formschlüssig von diesem gehalten und trägt zu einer festeren Halterung der Schiene 7 bei.

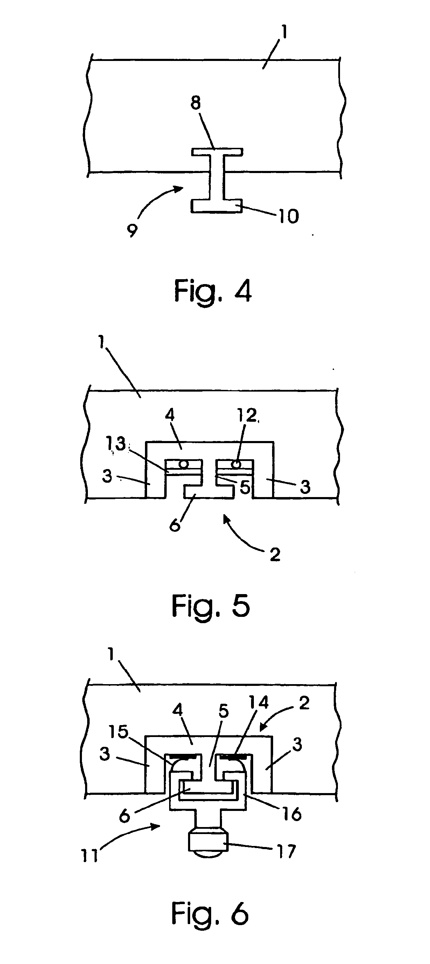

Fig. 4 zeigt eine weitere Ausführung einer Schiene 9 mit einem Doppel-T-Profil, wobei ein erster in den Hartschaum eingebetteter T-förmiger Abschnitt einen Befestigungsanker 8 bildet, durch den die Schiene 9 formschlüssig im Hartschaum gehalten ist, und ein zweiter T-förmiger Abschnitt ein aus dem Hartschaum ragendes Außenteil 10 bildet, an welchem Funktionsteile an verschiedenen Stellen befestigt bzw. verschoben werden können.

In Fig. 5 ist eine Weiterbildung des Ausführungsbeispiels von Fig. 2 gezeigt. Die Schiene 2 ist mit der aus Fig. 2 identisch. Entlang der Basis 4 ist beiderseits des Fußteils 5 jeweils ein leckender Lichtleiter 12 verlegt, d.h. ein Lichtleiter, der an einem Längsende eingespeistes Licht kontinuierlich über seine Länge verteilt abgibt. Jeder der Lichtleiter 12 ist von einer jeweiligen Streuscheibe 13 abgedeckt, die zwischen dem Fußteil 5 und einem jeweiligen der Schenkel 3 in paralleler Ausrichtung zur Basis 4 eingesetzt ist.

Über die Lichtleiter 12 lässt sich eine Fahrgastzelle des Kraftfahrzeuges entlang ihrer ganzen Länge mit Licht versorgen. Die Streuscheiben 13 sorgen dabei für eine homogenere Verteilung des von den Lichtleitern 12 abgegebenen Lichtes innerhalb der Fahrgastzelle.

Die Lichtleiter 12 könnten bei dieser Ausgestaltung auch jeweils durch eine sich entlang der Basis 4 erstreckende, mit kleinen weißen Leuchtdioden, insbesondere SMD-Leuchtdioden, bestückte flexible Leiterplatte ersetzt werden.

Schließlich ist in Fig. 6 eine andere Weiterbildung des Ausführungsbeispiels von Fig. 2 gezeigt. Wie zuvor ist die Schiene 2 mit der aus Fig. 2 identisch. Entlang der Basis 4 ist bei dieser Weiterbildung beiderseits des Fußteils 5 jeweils ein Stromleiter 14 verlegt. Außerdem ist eine an der Schiene 2 angeordnete Lampe 11 gezeigt. Die Lampe 11 weist einen senkrecht nach unten hängenden Leuchtkörper 17 sowie eine Halteklaue 16 auf, welche den Querbalken 6 des T-förmigen Profils 5, 6 umfasst, und mit der die Lampe 11 an der Schiene 2 eingehängt ist. An der Basis 4 zugewandten Flächen sind beiderseits des Fußteils 5 Schleifkontakte 15 an der Halteklaue 16 vorgesehen, die mit einem jeweiligen der Stromleiter 14 in Kontakt stehen.

Die Lampe 11 ist entlang der Schiene 2 verschiebbar und kann entlang einer Länge der Schiene 2 an beliebigen Stellen angeordnet werden. Über die Stromleiter 14 und die Schleifkontakte 15 ist dabei eine von der Position der Lampe 11 an der Schiene 2 unabhängige Stromversorgung für deren Betrieb gewährleistet.

### Bezugszeichenliste

| | |
|---|---|
| Verkleidungselement | 1 |
| Schiene | 2 |
| Schenkel | 3 |
| Basis | 4 |
| Fußteil | 5 |
| Querbalken | 6 |
| Schiene | 7 |
| Befestigungsanker | 8 |
| Schiene | 9 |
| Außenteil | 10 |
| Lampe | 11 |
| Lichtleiter | 12 |
| Streuscheibe | 13 |
| Stromleiter | 14 |
| Schleifkontakt | 15 |
| Halteklaue | 16 |
| Leuchtkörper | 17 |

## Patentansprüche

1. Kraftfahrzeug mit wenigstens einem Verkleidungselement (1) aus Hartschaum zum wenigstens teilweisen Verkleiden eines Fahrzeuginnenraumes und wenigstens einer von dem Hartschaum gehaltenen Schiene (2, 7, 9), an der wenigstens ein Funktionsteil (11) an einer Vielzahl von Stellen befestigbar ist, **dadurch gekennzeichnet, dass** die Schiene (2, 7, 9) wenigstens teilweise in dem Hartschaum eingebettet ist.

2. Kraftfahrzeug nach Anspruch 1, **dadurch gekennzeichnet, dass** der Hartschaum ein Polyurethan-Schaum ist.

3. Kraftfahrzeug nach einem der vorhergehenden Ansprüche, **dadurch gekennzeichnet, dass** der Hartschaum faserverstärkt ist.

4. Kraftfahrzeug nach einem der vorhergehenden Ansprüche, **dadurch gekennzeichnet, dass** das Verkleidungselement (1) eine seitliche Wand oder ein Dach einer Fahrgastzelle oder eines Laderaumes wenigstens teilweise verkleidet.

5. Kraftfahrzeug nach Anspruch 4, **dadurch gekennzeichnet, dass** der Hartschaum eine nachgiebige Verkleidung der Fahrgastzelle oder des Laderaums bildet.

6. Kraftfahrzeug nach einem der vorhergehenden Ansprüche, **dadurch gekennzeichnet, dass** die Schiene (7, 9) wenigstens einen im Hartschaum eingebetteten und formschlüssig gehaltenen Befestigungsanker (8) umfasst.

7. Kraftfahrzeug nach einem der vorhergehenden Ansprüche, **dadurch gekennzeichnet, dass** die Schiene (2, 7, 9) eine Metallschiene, insbesondere eine Aluminiumschiene, ist.

8. Kraftfahrzeug nach einem der Ansprüche 1 bis 6, **dadurch gekennzeichnet, dass** die Schiene (2, 7, 9) eine Kunststoffschiene ist.

9. Kraftfahrzeug nach einem der vorhergehenden Ansprüche, **dadurch gekennzeichnet, dass** die Schiene (2, 7, 9) wenigstens einen Bereich (5, 6; 10) mit einem T-förmigen Querschnitt aufweist.

10. Kraftfahrzeug nach einem der vorhergehenden Ansprüche, **dadurch gekennzeichnet, dass** die Schiene (2) mit einer Einrichtung (14) zur Versorgung des Funktionsteils (11) mit Strom versehen ist.

11. Kraftfahrzeug nach einem der vorhergehenden Ansprüche, **dadurch gekennzeichnet, dass** die Schiene (2) wenigstens eine sich entlang der Schiene (2) erstreckende Lichtquelle (12) umfasst.

12. Kraftfahrzeug nach Anspruch 11, **dadurch gekennzeichnet, dass** die Lichtquelle (12) von wenigstens einer Streuscheibe (13) wenigstens teilweise abgedeckt ist.

## Claims

1. Motor vehicle with at least one cladding element (1) of rigid foam for at least partly cladding a vehicle interior and at least one rail (2, 7, 9) which is held by the rigid foam and to which at least one functional part (11) can be fastened at a plurality of points, **characterised in that** the rail (2, 7, 9) is embedded at least partly in the rigid foam.

2. Motor vehicle according to Claim 1, **characterised in that** the rigid foam is a polyurethane foam.

3. Motor vehicle according to any one of the preceding Claims, **characterised in that** the rigid foam is fibre-reinforced.

4. Motor vehicle according to any one of the preceding Claims, **characterised in that** the cladding element (1) at least partly clads a lateral wall or a roof of a passenger compartment or of a loading space.

5. Motor vehicle according to Claim 4, **characterised in that** the rigid foam forms flocible cladding of the passenger compartment or of the loading space.

6. Motor vehicle according to any one of the preceding Claims, **characterised in that** the rail (7, 9) comprises at least one fastening anchor (8) which is embedded and positively retained in the rigid foam.

7. Motor vehicle according to any one of the preceding Claims, **characterised in that** the rail (2, 7, 9) is a metal rail, in particular an aluminium rail.

8. Motor vehicle according to any one of Claims 1 to 6, **characterised in that** the rail (2, 7, 9) is a plastics rail.

9. Motor vehicle according to any one of the preceding Claims, **characterised in that** the rail (2, 7, 9) has at least one region (5, 6; 10) with a T-shaped cross section.

10. Motor vehicle according to any one of the preceding Claims, **characterised in that** the rail (2) is provided with a device (14) for supplying the functional part (11) with current.

11. Motor vehicle according to any one of the preceding Claims, **characterised in that** the rail (2) comprises at least one light source (12) which extends along the rail (2).

12. Motor vehicle according to Claim 11, **characterised in that** the light source (12) is covered at least partly by at least one diffusion screen (13).

## Revendications

1. Véhicule automobile équipé d'au moins un élément de garniture (1) en mousse rigide pour la garniture au moins partielle d'un habitacle de véhicule automobile et d'au moins un rail maintenu par la mousse rigide (2, 7, 9) sur lequel au moins un élément fonctionnel (11) peut être fixé à une pluralité d'emplacements, **caractérisé en ce que** le rail (2, 7, 9) est encastré au moins partiellement dans la mousse rigide.

2. Véhicule automobile selon la revendication 1, **caractérisé en ce que** la mousse rigide est une mousse polyuréthane.

3. Véhicule automobile selon l'une quelconque des revendications précédentes, **caractérisé en ce que** la mousse rigide est renforcée par des fibres.

4. Véhicule automobile selon l'une quelconque des revendications précédentes, **caractérisé en ce que** l'élément de garniture (1) garnit au moins partiellement une paroi latérale ou un toit d'un compartiment passager ou d'un compartiment à bagages.

5. Véhicule automobile selon la revendication 4, **caractérisé en ce que** la mousse rigide forme une garniture flexible du compartiment passager ou du compartiment à bagages.

6. Véhicule automobile selon l'une quelconque des revendications précédentes, **caractérisé en ce que** le rail (7, 9) comprend au moins une pièce d'ancrage (8) encastrée et maintenue par correspondance de forme dans la mousse rigide.

7. Véhicule automobile selon l'une quelconque des revendications précédentes, **caractérisé en ce que** le rail (2, 7, 9) est un rail métallique, notamment un rail en aluminium.

8. Véhicule automobile selon l'une quelconque des revendications 1 à 6, **caractérisé en ce que** le rail (2, 7, 9) est un rail en matière plastique.

9. Véhicule automobile selon l'une quelconque des revendications précédentes, **caractérisé en ce que** le rail (2, 7, 9) comporte au moins une zone (5, 6 ; 10) avec une section transversale en forme de T.

10. Véhicule automobile selon l'une quelconque des revendications précédentes, **caractérisé en ce que** le rail (2) est muni d'un dispositif (14) pour l'alimentation électrique de l'élément fonctionnel (11).

11. Véhicule automobile selon l'une quelconque des revendications précédentes, **caractérisé en ce que** le rail (2) comporte au moins une source lumineuse (12) s'étendant le long du rail (2).

12. Véhicule automobile selon la revendication 11, **caractérisé en ce que** la source lumineuse (12) est recouverte au moins partiellement par au moins un verre diffusant (13).
